(19) Europäisches Patentamt
European Patent Office
Office européen des brevets

(11) **EP 4 317 057 A1**

(12) **EUROPEAN PATENT APPLICATION**
published in accordance with Art. 153(4) EPC

(43) Date of publication:
**07.02.2024 Bulletin 2024/06**

(21) Application number: **22780582.7**

(22) Date of filing: **25.03.2022**

(51) International Patent Classification (IPC):
**C01B 21/068** (2006.01)   **C04B 35/596** (2006.01)

(52) Cooperative Patent Classification (CPC):
**C01B 21/068; C04B 35/584**

(86) International application number:
**PCT/JP2022/014453**

(87) International publication number:
**WO 2022/210369 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021058576**

(71) Applicant: **Tokuyama Corporation
Shunan-shi, Yamaguchi 745-8648 (JP)**

(72) Inventors:
• **KUSANO, Dai**
  **Shunan-shi, Yamaguchi 745-8648 (JP)**
• **WAKAMATSU, Satoru**
  **Shunan-shi, Yamaguchi 745-8648 (JP)**
• **GOTOU, Kunihiro**
  **Shunan-shi, Yamaguchi 745-8648 (JP)**

(74) Representative: **Kraus & Lederer
Patentanwälte PartGmbB
Thomas-Wimmer-Ring 15
80539 München (DE)**

(54) **METHOD FOR PRODUCING SILICON NITRIDE SINTERNED BODY**

(57)     The method for producing a silicon nitride sintered body of the present invention includes: firing a mixed raw material containing 100 parts by mass of a silicon nitride powder, 1 to 10 parts by mass of at least one metal-silicon carbonitride compound selected from the group consisting of a metal-silicon carbonitride compound A represented by a composition formula $M_2Si_4N_6C$ (M is Hf, Mg, Sr, Zr, Sc, Y, or a lanthanoid element) and a metal-silicon carbonitride compound B represented by a composition formula $M_3Si_8N_{12}C_2$ (M is Hf, Mg, Sr, Zr, Sc, Y, or a lanthanoid element), and 1 to 10 parts by mass of a metal oxide compound.

According to the present invention, a method for producing a silicon nitride sintered body that is dense and has a high thermal conductivity can be provided even when firing is performed at normal pressure or substantially normal pressure.

Fig. 2

EP 4 317 057 A1

**Description**

Technical Field

The present invention relates to a method for producing a silicon nitride sintered body having high denseness and an excellent thermal conductivity.

Background Art

A silicon nitride sintered body obtained by sintering a silicon nitride powder to which various sintering aids have been added at high temperature has, among various ceramic sintered bodies, characteristics such as lightness, high mechanical strength, high chemical resistance, and high electrical insulation and is used as wear-resistant members such as ball bearings and high-temperature structural members. Because the thermal conductivity can also be increased by devising the type of aids and sintering conditions, the silicon nitride sintered body has also come into use as a thin and high-strength substrate material for heat dissipation.

As a method for synthesizing a silicon nitride powder, for example, a reduction -nitridation method (for example, PTL 1) in which nitrogen gas is circulated in the presence of a carbon powder using a silica powder as a raw material to produce silicon nitride, a direct nitridation method (for example, PTL 2) in which metal silicon (silicon powder) and nitrogen are reacted at high temperature, and an imide decomposition method in which a silicon halide and ammonia are reacted are known.

Further, a method for synthesizing a metal nitride by a direct nitridation method using Self-Propagating High Temperature Synthesis (SHS method) is also known. The SHS method is also called a combustion synthesis method, is a synthesis method in which a raw material powder containing a silicon powder is introduced into a reaction vessel, a part of the raw material powder is ignited at high temperature under a nitrogen atmosphere to cause a nitridation reaction, and the heat of nitridation combustion generated by the nitridation reaction is propagated to the surroundings to react the whole, and is known as a relatively inexpensive synthesis method.

It is known that $\alpha$-type and $\beta$-type exist as crystal forms of a silicon nitride powder. For example, as shown in Non-PTL 1, an $\alpha$-type silicon nitride powder is dissolved in a sintering aid during the sintering process and reprecipitated as $\beta$-type, and as a result, a sintered body that is dense and has a high thermal conductivity can be obtained. Thus, an $\alpha$-type silicon nitride powder is now widely used.

However, when an $\alpha$-type silicon nitride powder is produced, the production process tends to be complicated. For example, in a direct nitridation method, nitriding at a low temperature for a long time is required so as not to produce the $\beta$-type, which increases the production cost (Non-PTL 2).

Against this background, a technique for producing a sintered body that is dense and has a high thermal conductivity using a $\beta$-type silicon nitride powder that is produced at a relatively low cost is desired.

PTL 3 describes an invention relating to highly thermal conductive silicon nitride ceramics and a method for producing the same, and the Examples show that a sintered body that is dense and has a high thermal conductivity can be obtained by sintering a molded body containing a $\beta$-type silicon nitride powder having an average particle size of 0.5 pm and a sintering aid composed of ytterbium oxide and a magnesium silicon nitride powder at 1900°C for 2 to 24 hours in a pressurized nitrogen atmosphere of 10 atm.

Citation List

Patent Literatures

PTL 1: JP 2009-161376 A
PTL 2: JP 10-218612 A
PTL 3: JP 2002-128569 A

Non-Patent Literatures

Non-PTL 1: Journal of Nihon Hakuyo Kikan Gakkai, September 1993, Vol. 28, No. 9, p548-556
Non-PTL 2: Journal of the Ceramic Society of Japan 100 [11] 1366-1370 (1992)

## Summary of Invention

### Technical Problem

The sintered body of a β-type silicon nitride powder disclosed in PTL 3 is produced in pressurized nitrogen of 10 atm as described above. In general, when firing is performed under pressure, decomposition of silicon nitride as a raw material is easily suppressed, and thus, firing at a high temperature above 1800°C is possible. It is known that when firing is performed under such high temperature and high pressure conditions, the produced sintered body is easily densified, and the amount of impurity oxygen dissolved into silicon nitride particles, which is one factor of reduction of the thermal conductivity, can be reduced, and a sintered body having a high thermal conductivity is easily obtained.

However, when firing is performed under pressure as in PTL 3, a pressure vessel needs to be used during production. Thus, there are problems of equipment restrictions in the production and the high production cost. Further, PTL 3 dose not describe or suggest at all how to obtain a sintered body having a high thermal conductivity using a β-type silicon nitride powder under normal pressure (atmospheric pressure) or substantially normal pressure (pressure near atmospheric pressure) conditions that do not require the use of a pressure vessel.

The present invention has been made in view of the conventional problems, and an object of the present invention is to provide a method for producing a silicon nitride sintered body that is dense and has a high thermal conductivity even when a silicon nitride powder having a high β conversion rate is used as a raw material and firing is performed at normal pressure or substantially normal pressure.

### Solution to Problem

The present inventors have made intensive studies to achieve the object. As a result, they have found that by using a mixed raw material containing predetermined amounts of a silicon nitride powder, a specific metal-silicon carbonitride compound, and an oxide sintering agent, a silicon nitride sintered body that is dense and has a high thermal conductivity can be obtained even under the firing conditions of normal pressure or substantially normal pressure, and completed the present invention.

The summary of the present invention is the following [1] to [4].

[1] A method for producing a silicon nitride sintered body, including:
firing a mixed raw material containing 100 parts by mass of a silicon nitride powder, 1 to 10 parts by mass of at least one metal-silicon carbonitride compound selected from the group consisting of a metal-silicon carbonitride compound A represented by a composition formula $M_2Si_4N_6C$ (M is Hf, Mg, Sr, Zr, Sc, Y, or a lanthanoid element) and a metal-silicon carbonitride compound B represented by a composition formula $M_3Si_8N_{12}C_2$ (M is Hf, Mg, Sr, Zr, Sc, Y, or a lanthanoid element), and 1 to 10 parts by mass of a metal oxide compound.

[2] The method for producing a silicon nitride sintered body according to claim 1, wherein the mixed raw material further contains 1 to 10 parts by mass of a metal-silicon nitride compound relative to 100 parts by mass of the silicon nitride powder.

[3] The method for producing a silicon nitride sintered body according to [1] or [2], wherein the firing is performed at a temperature of 1200 to 1900°C under an inert gas atmosphere and a pressure of 0 MPa G or more and 0.92 MPa ·G or less.

[4] The method for producing a silicon nitride sintered body according to any one of [1] to [3], wherein a molded body comprising the mixed raw material is produced using water as a molding aid and then fired.

According to the present invention, a method for producing a silicon nitride sintered body that is dense and has a high thermal conductivity can be provided even when a silicon nitride powder is used as a raw material and firing is performed at normal pressure or substantially normal pressure.

### Brief Description of Drawings

Fig. 1 is an XRD pattern of $Y_2Si_4N_6C$.
Fig. 2 is a SEM photograph of $Y_2Si_4N_6C$.
Fig. 3 is an XRD pattern of $Yb_2Si_4N_6C$.
Fig. 4 is an XRD pattern of $Er_2Si_4N_6C$.
Fig. 5 is an XRD pattern of $La_2Si_4N_6C$.
Fig. 6 is an XRD pattern of $Ce_3Si_8N_{12}C_2$.

Fig. 7 is an XRD pattern of $Zr_3Si_8N_{12}C_2$.

Description of Embodiments

[Method for producing silicon nitride sintered body]

The method for producing a silicon nitride sintered body of the present invention includes firing a mixed raw material containing 100 parts by mass of a silicon nitride powder, 1 to 10 parts by mass of at least one metal-silicon carbonitride compound selected from the group consisting of a metal-silicon carbonitride compound A represented by a composition formula $M_2Si_4N_6C$ (M is Hf, Mg, Sr, Zr, Sc, Y, or a lanthanoid element) and a metal-silicon carbonitride compound B represented by a composition formula $M_3Si_8N_{12}C_2$ (M is Hf, Mg, Sr, Zr, Sc, Y, or a lanthanoid element), and 1 to 10 parts by mass of a metal oxide compound.

[Mixed raw material]

The method for producing a silicon nitride sintered body of the present invention includes firing a mixed raw material having a specific composition. The mixed raw material contains a silicon nitride powder, a metal-silicon carbonitride compound, and a metal oxide compound. The metal-silicon carbonitride compound, the metal oxide compound, and the metal-silicon nitride compound described later are used as sintering aids.

Each component contained in the mixed raw material will be described below.

<Silicon nitride powder>

In the present invention, though known silicon nitride powders can be used without particular limitation as the silicon nitride powder contained in the mixed raw material, the sintering aid which is the characteristic of the present invention exhibits the highest effect when a silicon nitride powder having a high β conversion rate is used.

Thus, the silicon nitride powder having a high β conversion rate will be described below.

The silicon nitride powder contained in the mixed raw material preferably have a β conversion rate of 80% or more. A silicon nitride powder having a β conversion rate of 80% or more can be obtained without setting strict production conditions, and thus can be produced at a relatively low cost. Thus, by using a silicon nitride powder having a high β conversion rate, the overall production cost of the silicon nitride sintered body can be suppressed. Further, by setting the β conversion rate high, the amount of oxygen taken in when α silicon nitride particles transform into β silicon nitride particles during firing can be further suppressed. The β conversion rate of the silicon nitride powder is preferably 85% or more, and more preferably 90% or more.

The β conversion rate of the silicon nitride powder means the peak intensity ratio of the β-phase to the total of the α-phase and the β-phase in the silicon nitride powder [100 × (peak intensity of β-phase)/(peak intensity of α-phase + peak intensity of β-phase)], and is determined by powder X-ray diffraction (XRD) measurement using a CuKα ray. More specifically, the β conversion rate is determined by calculating the weight ratios of the α-phase and the β-phase of the silicon nitride powder by the method described in C. P. Gazzara and D. R. Messier: Ceram. Bull., 56 (1977), 777-780.

(Amount of solid solution oxygen)

Though the amount of solid solution oxygen in the silicon nitride powder is not particularly limited, it is preferably 0.2% by mass or less. When the amount of solid solution oxygen is 0.2% by mass or less, the thermal conductivity of the silicon nitride sintered body is high. From the viewpoint of obtaining a silicon nitride sintered body having a high thermal conductivity, the amount of solid solution oxygen in the silicon nitride powder is preferably 0.1% by mass or less.

The amount of solid solution oxygen means oxygen dissolved in the particles of the silicon nitride powder (hereinafter also referred to as internal oxygen), and oxygen derived from oxides such as $SiO_2$ that inevitably exist on the particle surface (hereinafter also referred to as external oxygen) is not included.

The amount of solid solution oxygen can be measured by the method described in Examples.

Though the method for adjusting the amount of solid solution oxygen in the silicon nitride powder is not particularly limited, for example, high-purity raw materials are preferably used in the production of the silicon nitride powder. For example, when the silicon nitride powder is produced by a direct nitridation method, a silicon powder that has no factor of oxygen dissolving inside is preferably used as a raw material to be used. Specifically, a silicon powder derived from semiconductor grade silicon, for example, a silicon powder typified by a cutting powder produced during processing such as cutting of the silicon is preferably used. The semiconductor grade silicon is typically polycrystalline silicon obtained by the so-called "Siemens method" in which high-purity trichlorosilane and hydrogen are reacted in a bell-jar reaction vessel.

(Specific surface)

Though the specific surface of the silicon nitride powder is not particularly limited, it is preferably 7 to 20 $m^2/g$. When the specific surface of the silicon nitride powder is 20 $m^2/g$ or less, the amount of solid solution oxygen is easily reduced, and when the specific surface is 7 $m^2/g$ or more, a silicon nitride sintered body having a high density and high strength is easily obtained. The specific surface of the silicon nitride powder is preferably 12 to 15 $m^2/g$.

In the present invention, the specific surface means the BET specific surface measured by the BET one-point method with nitrogen gas adsorption.

(Average particle size)

The average particle size $D_{50}$ of the silicon nitride powder is preferably 0.5 to 3 pm, and more preferably 0.7 to 2.0 pm. When a silicon nitride powder having such an average particle size is used, sintering further easily proceeds. The average particle size $D_{50}$ is a value based on 50% volume measured by a laser diffraction scattering method.

The percentage of particles having a particle size of 0.5 pm or less in the silicon nitride powder is preferably 20 to 50% by mass, and more preferably 20 to 40% by mass. The percentage of particles having a particle size of 1 pm or more in the silicon nitride powder is preferably 20 to 50% by mass, and more preferably 20 to 40% by mass. When a silicon nitride powder having such a particle size distribution is used, a silicon nitride sintered body that is dense and has a high thermal conductivity is easily obtained.

Though the reason thereof is not clear, presumably unlike $\alpha$ silicon nitride particles, $\beta$ silicon nitride particles are less likely to dissolve and re-precipitate during firing, and a denser sintered body can be obtained by adjusting the balance between fine particles and coarse particles to be constant at the initial stage of firing.

(Total amount of oxygen)

Though the total amount of oxygen in the silicon nitride powder is not particularly limited, it is preferably 1% by mass or more. The total amount of oxygen is the sum of the amount of solid solution oxygen (internal oxygen) and the amount of external oxygen. When the total amount of oxygen is not less than the lower limit, an effect of, for example, silicon oxide and the like on the surface of the particles facilitating sintering is exhibited. The total amount of oxygen in the silicon nitride powder is preferably 10% by mass or less.

Even when the total amount of oxygen in the silicon nitride powder is 1% by mass or more, the thermal conductivity of the sintered body can be increased as long as the amount of solid solution oxygen is not more than a certain value as described above.

The total amount of oxygen in the silicon nitride powder can be measured by the method described in Examples.

The amount of the silicon nitride powder in the mixed raw material is preferably 80% by mass or more, and preferably 90% by mass or more, based on the total amount of the mixed raw material.

(Production of silicon nitride powder)

The method for producing the silicon nitride powder is not particularly limited as long as a silicon nitride powder having the properties described above can be obtained. As the method for producing the silicon nitride powder, for example, a reduction-nitridation method in which nitrogen gas is circulated in the presence of a carbon powder using a silica powder as a raw material to produce silicon nitride, a direct nitridation method in which a silicon powder and nitrogen are reacted at high temperature, and an imide decomposition method in which a silicon halide and ammonia are reacted can be applied. However, from the viewpoint of easy production of the silicon nitride powder having the above-mentioned properties, a direct nitridation method is preferable, and particularly, a direct nitridation method using SHS method (combustion synthesis method) is more preferable.

A combustion synthesis method is a method in which a silicon powder is used as a raw material, and a part of the raw material powder is forcedly ignited under a nitrogen atmosphere to synthesize silicon nitride by self-heating of the raw material compound. The combustion synthesis method is a known method, and for example, JP 2000-264608 A and WO 2019/167879 can be referred to.

<Metal-silicon carbonitride compound>

The mixed raw material contains at least one metal-silicon carbonitride compound selected from the group consisting of a metal-silicon carbonitride compound A represented by a composition formula $M_2Si_4N_6C$ (M is Hf, Mg, Sr, Zr, Sc, Y, or a lanthanoid element) and a metal-silicon carbonitride compound B represented by a composition formula $M_3Si_8N_{12}C_2$ (M is Hf, Mg, Sr, Zr, Sc, Y, or a lanthanoid element).

By using such a specific metal-silicon carbonitride compound and using the specific metal-silicon carbonitride compound in combination with a metal oxide compound described later, the resulting silicon nitride sintered body is imparted with high denseness and the thermal conductivity also becomes high. In particular, because the metal-silicon carbonitride compound B contains a large amount of C (carbon), and has a high reducing action, a silicon nitride sintered body having a low oxygen concentration and an excellent thermal conductivity can be easily obtained.

(Metal-silicon carbonitride compound A)

The metal-silicon carbonitride compound A is a compound represented by a composition formula $M_2Si_4N_6C$ (M is Hf, Mg, Sr, Zr, Sc, Y, or a lanthanoid element). M is Hf, Mg, Sr, Zr, Sc, Y, or a lanthanoid element. The lanthanoid element is a general term for 15 elements with atomic numbers from 57 to 71, i.e., from lanthanum (La) to lutetium (Lu).

Among these, because the particle shape of the resulting silicon nitride sintered body is easily adjusted, the denseness is increased, and the strength is easily improved, M is preferably Y, Yb, La, or Er, which are excellent in the effect of increasing the crystallization of grain boundaries, and more preferably Y, Yb, or La.

Examples of a method for producing the metal-silicon carbonitride compound A include, for example, a method in which $Si_3N_4$, $M_2O_3$, C, and $N_2$ are used as raw materials for forming the metal-silicon carbonitride compound, and are heated to a predetermined temperature (see the formula below).

$$8Si_3N_4 + 6M_2O_3 + 15C + 2N_2 \rightarrow 6M_2Si_4N_6C + 9CO_2$$

Examples of another method for producing the metal-silicon carbonitride compound A include a method in which $Si_3N_4$, MN, and SiC are used as raw materials for forming the metal-silicon carbonitride compound, and they are heated to a predetermined temperature (see the formula below).

$$Si_3N_4 + 2MN + SiC \rightarrow M_2Si_4N_6C$$

Specifically, the metal-silicon carbonitride compound A can be produced by reacting a mixture in which the raw materials are mixed in ratios according to the composition formulae in a nitrogen atmosphere at 1400 to 1800°C, preferably 1500 to 1700°C for 1 hour or more, preferably 3 to 10 hours, and pulverizing the reaction product with a known pulverizer.

Mixing of the raw materials can be performed using a known mixer such as a planetary mill. Mixing of the raw materials is preferably performed by wet blending in an organic solvent such as ethanol, and the slurry obtained by wet-mixing is preferably subjected to a reaction after removal of the organic solvent and drying using, for example, an evaporator, for example, under vacuum. The treatment temperature is preferably about 90 to 120°C. Further, it is recommended that the reaction be performed in a vacuum/pressurized atmosphere furnace.

(Metal-silicon carbonitride compound B)

The metal-silicon carbonitride compound B is a compound represented by the composition formula $M_3Si_8N_{12}C_2$ (M is Hf, Mg, Sr, Zr, Sc, Y, or a lanthanoid element). M is Hf, Mg, Sr, Zr, Sc, Y, or a lanthanoid element.

Among these, because the particle shape of the resulting silicon nitride sintered body is easily adjusted, the denseness is increased, and the strength is easily improved, M is preferably Zr or Ce, which are excellent in the effect of increasing the crystallization of grain boundaries.

Examples of a method for producing the metal-silicon carbonitride compound B include, for example, a method in which $Si_3N_4$, $MO_2$, C, and $N_2$ are used as raw materials for forming the metal-silicon carbonitride compound, and are heated to 1200 to 2000°C (see the formula below).

$$8Si_3N_4 + 9MO_2 + 15C + 2N_2 \rightarrow 3M_3Si_8N_{12}C_2 + 9CO_2$$

The metal-silicon carbonitride compound, the reaction product, can be identified using X-ray diffraction and SEM-EDX, as shown in Examples.

The content of the metal-silicon carbonitride compound in the mixed raw material is 1 to 10 parts by mass relative to 100 parts by mass of the silicon nitride powder. When the content of the metal-silicon carbonitride compound is less than 1 part by mass, the amount used of the metal oxide compound required for firing increases, making it difficult to obtain a silicon nitride sintered body having a high thermal conductivity. When the content of the metal-silicon carbonitride compound is more than 10 parts by mass, the effect corresponding to the amount of the metal-silicon carbonitride compound added is less likely to be obtained.

The content of the metal-silicon carbonitride compound is preferably 1 to 10 parts by mass, and more preferably 2 to 8 parts by mass relative to 100 parts by mass of the silicon nitride powder.

The content of the metal-silicon carbonitride compound in the mixed raw material means the content of the metal-silicon carbonitride compound A when the metal-silicon carbonitride compound is composed of only the metal-silicon carbonitride compound A, and means the content of the metal-silicon carbonitride compound B when the metal-silicon carbonitride compound is composed of only the metal-silicon carbonitride compound B. The content of the metal-silicon carbonitride compound in the mixed raw material means the total amount of the metal-silicon carbonitride compound A and the metal-silicon carbonitride compound B when the metal-silicon carbonitride compound is composed of the metal-silicon carbonitride compound A and the metal-silicon carbonitride compound B.

Though the content of the metal-silicon carbonitride compound B based on the total amount of the metal-silicon carbonitride compound is not particularly limited, it is preferably 50% by mass or more, more preferably 80% by mass or more, and further preferably 100% by mass. By a large amount of the metal-silicon carbonitride compound B being contained, the reducing action is increased, and a silicon nitride sintered body having a low oxygen concentration and an excellent thermal conductivity is easily obtained.

<Metal oxide compound>

The mixed raw material in the present invention contains a metal oxide compound together with the metal-silicon carbonitride compound as a sintering aid. By the metal oxide compound being contained, sintering of the silicon nitride powder proceeds more easily, and a denser and stronger sintered body is easily obtained.

The content of the metal oxide compound is 1 to 10 parts by mass, and preferably 2 to 8 parts by mass relative to 100 parts by mass of the silicon nitride powder. When the content of the metal oxide compound is less than 1 part by mass, sintering is less likely to proceed, and a dense silicon nitride sintered body is less likely to be obtained. When the content of the metal oxide compound is more than 10 parts by mass, the oxygen concentration of the silicon nitride sintered body is increased, and the thermal conductivity tends to decrease.

As the metal oxide compound, a metal oxide and the like can be used, and examples thereof include rare-earth oxides such as $Y_2O_3$, $La_2O_3$, $CeO_2$, $Nd_2O_3$, $Gd_2O_3$, and $Dy_2O_3$: and $CaO$, $MgO$, $SrO$, $BaO$, $ZrO_2$, and $HfO_2$. Among these, $MgO$ and $Y_2O_3$ are preferable.

One of the metal oxide compounds can be used singly, or two or more thereof can be used in combination.

From the viewpoint of improving the denseness and thermal conductivity of the resulting silicon nitride sintered body, the ratio of the content of the metal-silicon carbonitride compound to the content of the metal oxide compound in the mixed raw material (metal-silicon carbonitride compound/metal oxide compound) is preferably 0.1 to 10, more preferably 0.8 to 8, and further preferably 1.2 to 6.

<Metal-silicon nitride compound>

The mixed raw material in the present invention preferably further contains a metal-silicon nitride compound as a component of the sintering aid. By the metal-silicon nitride compound being contained, sintering of the powder proceeds more easily, and a sintered body that is further denser and has a higher thermal conductivity can be obtained.

Examples of the metal-silicon nitride compound include metal silicon nitrides such as $MgSiN_2$ (magnesium silicon nitride). Among these, compounds containing Mg as a metal element are preferable, and in particular magnesium silicon nitride is preferable.

One of the metal-silicon nitride compounds can be used singly or two or more thereof can be used in combination. Those having the same or different metal element as or from the metal element that constitutes the metal-silicon carbonitride compound are used without any particular limitation.

The content of the metal-silicon nitride compound is preferably 1 to 10 parts by mass, and more preferably 2 to 8 parts by mass relative to 100 parts by mass of the silicon nitride powder. When the content of the metal-silicon nitride compound is 1 part by mass or more, the effect of densifying the silicon nitride sintered body is easily exhibited. When the content of the metal-silicon nitride compound is 10 parts by mass or less, volatilization of the aid of the silicon nitride sintered body is reduced, swelling and the like of the sintered body can be prevented, and densification is facilitated.

(Sintering aid)

As described above, in the method for producing a silicon nitride sintered body of the present invention, a sintering aid containing a metal-silicon carbonitride compound and a metal oxide compound, and a sintering aid further containing a metal-silicon nitride compound in addition to the above-mentioned components are those of novel combinations, and in the production of a sintered body of a silicon nitride powder, in particular, in sintering under normal pressure or substantially normal pressure, a high sintering effect that cannot be achieved with conventional sintering aids can be exhibited.

Though in the present invention, the particle size of the metal-silicon carbonitride compound, metal oxide compound, and metal-silicon nitride compound used as sintering aids is not particularly limited, the average particle size $D_{50}$ is preferably 0.1 to 10 pm, in particular, 0.5 to 3 pm. The average particle size $D_{50}$ can be measured with a laser diffraction/scattering particle size distribution analyzer.

[Firing of mixed raw material]

In the method for producing a silicon nitride sintered body of the present invention, firing of the mixed raw material is performed by molding the mixed raw material into any shape to obtain a molded body, and then firing the molded body in a nitrogen atmosphere.

(Molded body)

Though the method for producing the molded product of the mixed raw material is not particularly limited, it is preferable that a molded body of any shape such as a sheet, a sphere, or a rectangular shape be produced using an organic solvent such as water or ethanol as a molding aid, and subjected to firing. To ensure the strength of the molded body, a known organic binder can also be used during molding. The molding aid and the organic binder are preferably removed before being subjected to firing.

(All amount of oxygen in molded body)

In the present invention, the all amount of oxygen in the molded body is preferably 1 to 15% by mass. The molded body refers to a molded body in a state to be subjected to sintering, and refers to a molded body in a state in which those which are removed by treatment such as drying and degreasing before being subjected to sintering, such as an organic binder and a solvent used in the production of the molded body, are not included. When the all amount of oxygen is 15% by mass or less, the thermal conductivity of the resulting silicon nitride sintered body is improved. When the all amount of oxygen is 1% by mass or more, sintering proceeds easily, a dense silicon nitride sintered body is obtained, and the thermal conductivity and strength are improved. The all amount of oxygen in the molded body is preferably 2 to 10% by mass, and more preferably 3 to 5% by mass. The all amount of oxygen can be within a desired range by appropriately adjusting the total amount of oxygen in the silicon nitride used, the type of the sintering aid, the molding method and the like.

(Total content of aluminum element in molded body)

The total content (mass) of an aluminum element in the molded body is preferably 800 ppm or less. Thereby, a silicon nitride sintered body having a high thermal conductivity can be obtained. The total content of an aluminum element in the molded body is preferably 500 ppm or less, and more preferably 200 ppm or less.

(Density of molded body)

Though the density of the molded body is not particularly limited, it is preferably 1.95 g/cm$^3$ or more, and more preferably 1.98 g/cm$^3$ or more. When the density of the molded body is not less than these lower limits, a silicon nitride sintered body having an excellent thermal conductivity is easily obtained.

(Production of molded body)

For a method for producing the molded body, specifically, water or an organic solvent can be added as a molding aid to the mixed raw material described above, and the mixture can be molded by a known molding method to produce a molded body. Water is preferably used as a molding aid. Addition of water improves ease of handling, ease of molding and the like. When water is used, the environmental load is reduced compared to the case of using an organic solvent, which is preferable.
From the viewpoint of improving moldability, a binder can be further incorporated into the mixed raw material for molding. The content of the binder in the mixed raw material is preferably 1 to 30 parts by mass relative to 100 parts by mass of the silicon nitride powder, and the ratio can be appropriately determined according to the molding method.
Examples of the binder include, but are not limited to, polyvinyl alcohol, polyvinyl butyral, methyl cellulose, alginic acid, polyethylene glycol, carboxymethyl cellulose, ethyl cellulose, and acrylic resins.
Examples of the known molding method include, for example, press molding, extrusion molding, injection molding, and sheet molding (doctor blade method).
After molding by a known molding method as described above, a step of heating the molded body to 450 to 650°C in air or under an inert atmosphere such as nitrogen or argon is preferably performed. By this step, used water can be removed and the binder can be removed (degreasing).

[Firing]

In the method for producing a silicon nitride sintered body of the present invention, the mixed raw material is fired. Though as described above, the mixed raw material can be fired as it is, the mixed raw material is preferably fired after being molded into a molded body composed of the mixed raw material using water as a molding aid.

Firing is preferably performed under an inert gas atmosphere. Under an inert gas atmosphere means, for example, under a nitrogen atmosphere or under an argon atmosphere.

Though firing can be performed under such an inert gas atmosphere by adopting a general Gass Pressure Sintering method (GPS method) as a method for sintering silicon nitride, a normal pressure firing method, that is, a method for performing sintering under normal pressure or under substantially normal pressure can also be adopted, which is one of characteristics of a sintering method in the present invention. That is, in the present invention, the firing pressure for performing firing is preferably 0 MPa ·G or more and 0.92 MPa G or less. G at the end of the pressure unit MPa ·G means a gauge pressure.

The hot press sintering method (HP method) is included in the normal pressure sintering method as long as it is performed under normal pressure or substantially normal pressure, and can be suitably performed in the present invention.

In general, silicon nitride is easily decomposed in a pressure range of such a normal pressure or substantially normal pressure, and thus it is impossible to increase the temperature to, for example, more than 1900°C in production. Thus, it was impossible to obtain a silicon nitride sintered body that is densified and has a high thermal conductivity. In contrast, in the production method of the present invention, the specific mixed raw material is used as described above, and thus a silicon nitride sintered body that is dense and has a high thermal conductivity can be obtained even in the above-mentioned pressure range.

Silicon nitride can be sintered under conditions of normal pressure or substantially normal pressure, and thus the production need not be performed in a pressure container (pressure vessel). Thus, production equipment can be simplified, and production costs can be reduced. Specifically, firing can be performed in batch furnaces such as muffle furnaces and tube furnaces, as well as in continuous furnaces such as pusher furnaces. A variety of production methods can be applied, and productivity is improved.

The molded body is preferably heated to a temperature of 1200 to 1900°C and fired. When the temperature is 1200°C or more, sintering of silicon nitride easily proceeds, and when the temperature is 1900°C or less, silicon nitride is less likely to decompose. From such a point of view, the heating temperature for firing is preferably 1600 to 1900°C.

Though the firing time is not particularly limited, it is preferably about 3 to 24 hours.

[Physical properties of silicon nitride sintered body]

The silicon nitride sintered body obtained by the production method of the present invention exhibits a high thermal conductivity. The thermal conductivity of the resulting silicon nitride sintered body is preferably 80 W/mK or more, and more preferably 100 W/mK or more.

The thermal conductivity can be measured by a laser flash method.

The silicon nitride sintered body obtained by the production method of the present invention has high denseness. Thus, the relative density of the resulting silicon nitride sintered body is preferably 98.5% or more, and more preferably 99% or more. The relative density is calculated by the following formula.

$$\text{Relative density (\%)} = 100 \times \text{measured density/theoretical density}$$

The measured density is measured by Archimedes method.

Examples

Hereinafter, Examples will be shown to describe the present invention more specifically, but the present invention is not limited to these Examples.

In Examples, various physical properties were measured by the following methods.

(1) β conversion rate of silicon nitride powder

The β conversion rate of the silicon nitride powder was determined by powder X-ray diffraction (XRD) measurement using a CuKα ray. Specifically, the β conversion rate was determined by calculating the weight ratios of the α-phase and the β-phase of the silicon nitride powder by the method described in C. P. Gazzara and D. R. Messier: Ceram. Bull., 56 (1977), 777-780.

(2) Specific surface of silicon nitride powder

The specific surface of the silicon nitride powder was measured using a BET method specific surface measuring apparatus (Macsorb HM model-1201) manufactured by MOUNTECH Co., Ltd. by the BET one-point method with nitrogen gas adsorption.
Before performing the specific surface measurement, the silicon nitride powder to be measured was previously heat-treated in air at 600°C for 30 minutes to remove organic substances adsorbed on the powder surface.

(3) Amount of solid solution oxygen and total amount of oxygen in silicon nitride powder

The amount of solid solution oxygen in the silicon nitride powder was measured by inert gas fusion-infrared absorption method. The measurement was performed with an oxygen/nitrogen analyzer ("EMGA-920" manufactured by HORIBA).
As a sample, 25 mg of the silicon nitride powder used in each Example and Comparative Example was enclosed in a tin capsule (a tin capsule manufactured by LECO was used), introduced into a graphite crucible, and heated at 5.5 kW for 20 seconds, and the adsorbed gas was degassed. Then, the temperature was raised at 0.8 kW for 10 seconds and from 0.8 kW to 4 kW over 350 seconds, and the amount of carbon dioxide generated during that time was measured and converted to the oxygen content. During the temperature rise for 350 seconds, the oxygen that is generated initially is oxygen derived from the oxide present on the surface of the silicon nitride particles (external oxygen), and the oxygen that is generated later corresponds to solid solution oxygen dissolved in the silicon nitride crystals (internal oxygen). Thus, the two peaks were separated by drawing a perpendicular from the part corresponding to the valley of these two measured peaks after subtracting the previously measured background. By proportionally distributing each peak area, the amount of solid solution oxygen (internal oxygen) and the amount of external oxygen were calculated.

(4) Particle size of silicon nitride powder

(i) Pretreatment of sample

As a pretreatment of the silicon nitride powder as a sample, the silicon nitride powder was subjected to a firing treatment in air at a temperature of about 500°C for 2 hours. For the firing treatment, in the particle size measurement, the amount of surface oxygen of the silicon nitride powder may be small, or the particle surface may be covered with a hydrophobic substance due to the pulverizing aid and the like during pulverization, and the particles themselves may exhibit hydrophobicity. In such cases, reproducible particle size measurement may be impossible due to insufficient dispersion in water. Thus, the silicon nitride powder as a sample is subjected to firing treatment in air at a temperature of about 200°C to 500°C for several hours to impart hydrophilicity to the silicon nitride powder and facilitate the dispersion in a water solvent, and particle size measurement with high reproducibility becomes possible. For this, it has been confirmed that even when the particles are fired in air, there is little effect on the particle size to be measured.

(ii) Measurement of particle size

Into a beaker with a maximum 100 ml marked line (inner diameter: 60 mmφ, height: 70 mm), 90 ml of water and 5 ml of sodium pyrophosphate having a concentration of 5% by mass were placed and stirred well, then about an earpickfull of a silicon nitride powder as a sample was placed, and the silicon nitride powder was dispersed for 2 minutes at AMPLITUDE 50% (about 2 amperes) with an ultrasonic homogenizer (US-300E manufactured by NISSEI Corporation, tip diameter: 26 mm).
The dispersion was performed by inserting the tip of the tip into the beaker up to the 20 ml marked line.
Then, the particle size distribution of the resulting dispersion of the silicon nitride powder was measured using a laser diffraction/scattering particle size distribution analyzer (Microtrac MT3300EXII manufactured by MicrotracBEL Corp.). As the measurement conditions, water (refractive index: 1.33) was selected as the solvent, refractive index 2.01 was selected as the particle properties, permeable was selected as the particle permeability, and an aspherical shape was selected as the particle shape. The particle size at which the cumulative curve of the particle size distribution measured by the particle size distribution measurement becomes 50% is defined as the average particle size (average particle size $D_{50}$).

(5) Density of molded body

The density of each molded body was measured using an automatic hydrometer (manufactured by SHINKO DENSHI CO.LTD: DMA-220H model), and the average of 15 pieces was taken as the density of the molded body.

(6) Total content of aluminum element in molded body

The total content of an aluminum element in the molded body was measured using an inductively coupled plasma emission spectrometer ("iCAP 6500 DUO" manufactured by Thermo Fisher Scientific Inc.).

(7) Thermal conductivity of silicon nitride sintered body

The thermal conductivity of the silicon nitride sintered body was measured by a laser flash method using LFA-502 manufactured by KYOTO ELECTRONICS MANUFACTURING CO., LTD. The thermal conductivity is determined by multiplying the thermal diffusivity, the density of the sintered body, and the specific heat of the sintered body. A value of 0.68 (J/g·K) was adopted as the specific heat of the silicon nitride sintered body. The density of the sintered body was measured using an automatic hydrometer (manufactured by SHINKO DENSHI CO.LTD: DMA-220H type).
The thermal conductivity was measured after blasting the surface of the silicon nitride sintered body and then coating the surface with Au and carbon.
The following raw materials were used in Examples and Comparative Examples.

<Silicon nitride powder>

The silicon nitride powder shown in Table 1 was prepared. These were produced by the following method.

(Production of silicon nitride powder)

A silicon powder (semiconductor grade, average particle size: 5 pm) and a silicon nitride powder (average particle size: 1.5 pm) as a diluent were mixed to obtain a raw material powder (Si: 80% by mass, $Si_3N_4$: 20% by mass). The raw material powder was filled in a reaction vessel to form a raw material powder layer. Then, the reaction vessel was placed in a pressure-resistant sealed reactor having an ignition apparatus and a gas supply/exhaust mechanism, the inside of the reactor was depressurized and degassed, and nitrogen gas was supplied to replace the inside with nitrogen. Then, nitrogen gas was gradually supplied to raise the pressure to 0.7 MPa. The bulk density of the raw material powder was 0.5 g/cm³ at the time when the predetermined pressure was reached (at the time of ignition).
Then, the end of the raw material powder in the reaction vessel was ignited to perform a combustion synthesis reaction, thereby a lumpy product of silicon nitride was obtained. After crushing the obtained lumpy product by rubbing the lumpy product against each other, an appropriate amount was placed into a vibration mill and finely pulverized for 6 hours. As the fine pulverizer and the fine pulverization method, a conventional apparatus and method were used. As a measure to prevent heavy metal contamination, the inside of the pulverizer was lined with urethane, and as the pulverization media, balls containing silicon nitride as a base compound were used. As a pulverizing aid, 1% by mass of ethanol was added immediately before the start of fine pulverization, and fine pulverization was performed with the pulverizer sealed to obtain a silicon nitride powder A. The measurement results of the obtained silicon nitride powder A are shown in Table 1.

[Table 1]

|  | Silicon nitride powder A |
|---|---|
| β Conversion rate (%) | 99 |
| Amount of solid solution oxygen (% by mass) | 0.06 |
| Specific surface (m²/g) | 7.0 |
| Total amount of oxygen (% by mass) | 1.844 |
| Average particle size D50 (μm) | 1.8 |

(continued)

|  | Silicon nitride powder A |
|---|---|
| Percentage of particles of 0.5 $\mu$m or less (% by mass) | 25 |
| Percentage of particles of 1 $\mu$m or more (% by mass) | 32 |

<Metal-silicon carbonitride compound A>

(1) Production of $Y_2Si_4N_6C$

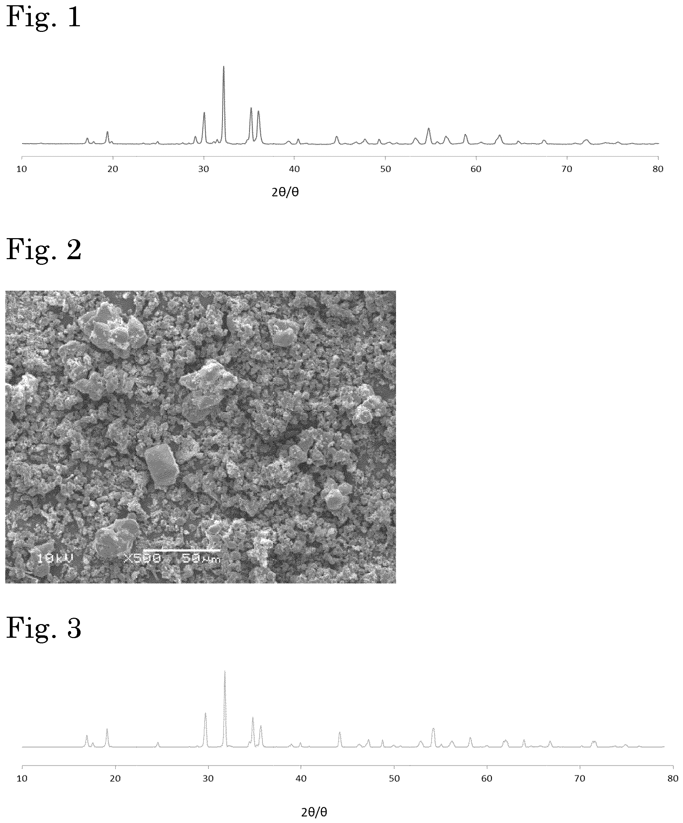

A yttrium oxide powder ($Y_2O_3$: Kojundo Chemical Lab. Co., Ltd.), a silicon nitride powder ($Si_3N_4$: UBE Corporation), and a carbon powder (C: Mitsubishi Chemical Corporation) were weighed so that the composition ratio would be $Y_2O_3$ : $Si_3N_4$ : C = 51 : 42 : 7, and mixed in ethanol for 2 hours under the condition of a rotational speed of 250 rpm using a planetary mill (manufactured by Fritsch Japan Co.,Ltd.). A silicon nitride pot and silicon nitride balls ($\varphi$: 1.0 mm) were used for mixing. Though a planetary mill was used as the mixing method and ethanol was used as the solvent, the mixing method and the solvent to be used are not limited thereto at all.
The solvent of the resulting slurry was volatilized with an evaporator, and the slurry was vacuum-dried at 110°C for 4 hours to be used as a starting material. The obtained mixed powder was weighed in a BN crucible, and set in a vacuum/pressurized atmosphere furnace (manufactured by Fujidempa Kogyo Co., Ltd., model: Multi500), and synthesis was performed at 1650°C in a nitrogen atmosphere. The powder after the synthesis was pulverized in a mortar and used as a silicon nitride sintering aid.
Compounds of the synthesized powder were identified using X-ray diffraction (Rigaku Corporation, model: RINT2500) and SEM-EDX (JEOL Ltd., model: JSM-5600). X-ray diffraction (XRD) results and the SEM photograph are shown in Figs. 1 and 2. For $Y_2Si_4N_6C$, because there is JCPDS-ICDD: 01-075-3081 as an X-ray diffraction database, identification was performed in combination.
As a result of analysis, it was confirmed that $Y_2Si_4N_6C$ was synthesized. The average particle size $D_{50}$ was 1.7 pm.

(2) Production of $Yb_2Si_4N_6C$

A ytterbium oxide powder ($Yb_2O_3$: Kojundo Chemical Lab. Co., Ltd.), a silicon nitride powder ($Si_3N_4$: UBE Corporation), and a carbon powder (C: Mitsubishi Chemical Corporation) were weighed so that the composition ratio would be $Yb_2O_3$ : $Si_3N_4$ : C = 64 : 31 : 5, and mixed in ethanol for 2 hours under the condition of a rotational speed of 250 rpm using a planetary mill (manufactured by Fritsch Japan Co.,Ltd.). A silicon nitride pot and silicon nitride balls ($\varphi$: 1.0 mm) were used for mixing. Though a planetary mill was used as the mixing method and ethanol was used as the solvent, the mixing method and the solvent to be used are not limited thereto at all.
The solvent of the resulting slurry was volatilized with an evaporator, and the slurry was vacuum-dried at 110°C for 4 hours to be used as a starting material. The obtained mixed powder was weighed in a BN crucible, and set in a vacuum/pressurized atmosphere furnace (manufactured by Fujidempa Kogyo Co., Ltd., model: Multi500), and synthesis was performed at 1650°C in a nitrogen atmosphere. The powder after the synthesis was pulverized in a mortar and used as a silicon nitride sintering aid.
Compounds of the synthesized powder were identified using X-ray diffraction (Rigaku Corporation, model: RINT2500) and SEM-EDX (JEOL Ltd., model: JSM-5600). XRD results are shown in Fig. 3.
As a result of analysis, it was confirmed that $Yb_2Si_4N_6C$ was synthesized. The average particle size $D_{50}$ was 1.3 pm.

(3) Production of $Er_2Si_4N_6C$

An erbium oxide powder ($Er_2O_3$: Kojundo Chemical Lab. Co., Ltd.), a silicon nitride powder ($Si_3N_4$: UBE Corporation), and a carbon powder (C: Mitsubishi Chemical Corporation) were weighed so that the composition ratio would be $Er_2O_3$ : $Si_3N_4$ : C = 64 : 31 : 5, and mixed in ethanol for 2 hours under the condition of a rotational speed of 250 rpm using a planetary mill (manufactured by Fritsch Japan Co.,Ltd.). A silicon nitride pot and silicon nitride balls ($\varphi$: 1.0 mm) were used for mixing. Though a planetary mill was used as the mixing method and ethanol was used as the solvent, the mixing method and the solvent to be used are not limited thereto at all.
The solvent of the resulting slurry was volatilized with an evaporator, and the slurry was vacuum-dried at 110°C for 4 hours to be used as a starting material. The obtained mixed powder was weighed in a BN crucible, and set in a vacuum/pressurized atmosphere furnace (manufactured by Fujidempa Kogyo Co., Ltd., model: Multi500), and synthesis was performed at 1650°C in a nitrogen atmosphere. The powder after the synthesis was pulverized in a mortar and used as a silicon nitride sintering aid.

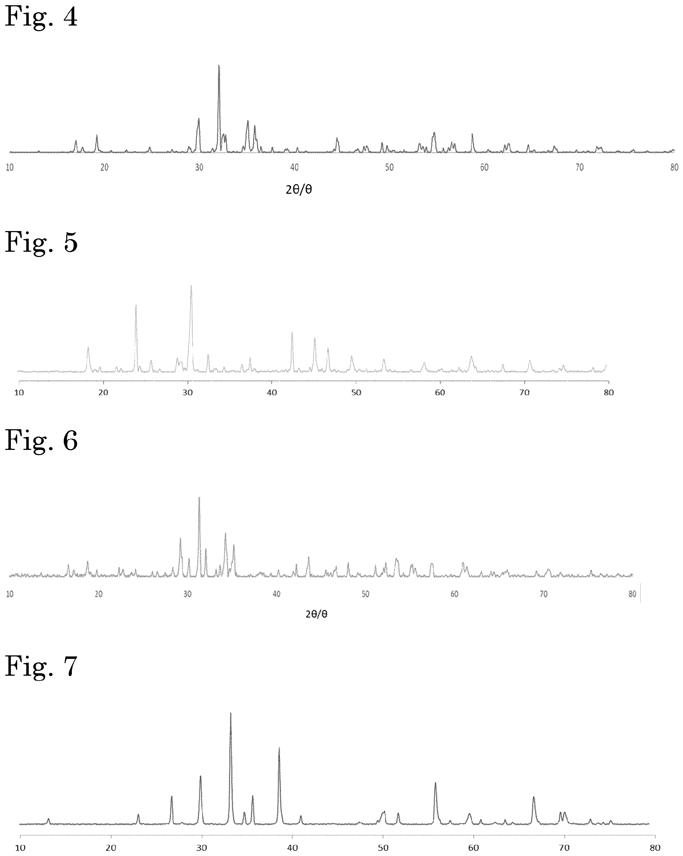

Compounds of the synthesized powder were identified using X-ray diffraction (Rigaku Corporation, model: RINT2500) and SEM-EDX (JEOL Ltd., model: JSM-5600). XRD results are shown in Fig. 4.

As a result of analysis, it was confirmed that $Er_2Si_4N_6C$ was synthesized. The average particle size $D_{50}$ was 1.9 pm.

(4) Production of $La_2Si_4N_6C$

A lanthanum hydroxide powder ($La(OH)_3$: Kojundo Chemical Lab. Co., Ltd.), a silicon nitride powder ($Si_3N_4$: UBE Corporation), and a carbon powder (C: Mitsubishi Chemical Corporation) were weighed so that the composition ratio would be $La(OH)_3 : Si_3N_4 : C = 64 : 31 : 5$, and mixed in ethanol for 2 hours under the condition of a rotational speed of 250 rpm using a planetary mill (manufactured by Fritsch Japan Co.,Ltd.). A silicon nitride pot and silicon nitride balls ($\varphi$: 1.0 mm) were used for mixing. Though a planetary mill was used as the mixing method and ethanol was used as the solvent, the mixing method and the solvent to be used are not limited thereto at all.

The solvent of the resulting slurry was volatilized with an evaporator, and the slurry was vacuum-dried at 110°C for 4 hours to be used as a starting material. The obtained mixed powder was weighed in a BN crucible, and set in a vacuum/pressurized atmosphere furnace (manufactured by Fujidempa Kogyo Co., Ltd., model: Multi500), and synthesis was performed at 1650°C in a nitrogen atmosphere. The powder after the synthesis was pulverized in a mortar and used as a silicon nitride sintering aid.

Compounds of the synthesized powder were identified using X-ray diffraction (Rigaku Corporation, model: RINT2500) and SEM-EDX (JEOL Ltd., model: JSM-5600). XRD results are shown in Fig. 5.

As a result of analysis, it was confirmed that $La_2Si_4N_6C$ was synthesized. The average particle size $D_{50}$ was 1.4 pm.

<Metal-silicon carbonitride compound B>

(1) Production of $Ce_3Si_8N_{12}C_2$

A cerium oxide powder ($CeO_2$: Kojundo Chemical Lab. Co., Ltd.), a silicon nitride powder ($Si_3N_4$: UBE Corporation), and a carbon powder (C: Mitsubishi Chemical Corporation) were weighed so that the composition ratio would be $CeO_2 : Si_3N_4 : C = 54 : 40 : 6$, and mixed in ethanol for 2 hours under the condition of a rotational speed of 250 rpm using a planetary mill (manufactured by Fritsch Japan Co.,Ltd.). A silicon nitride pot and silicon nitride balls ($\varphi$: 1.0 mm) were used for mixing. Though a planetary mill was used as the mixing method and ethanol was used as the solvent, the mixing method and the solvent to be used are not limited thereto at all.

The solvent of the resulting slurry was volatilized with an evaporator, and the slurry was vacuum-dried at 110°C for 4 hours to be used as a starting material. The obtained mixed powder was weighed in a BN crucible, and set in a vacuum/pressurized atmosphere furnace (manufactured by Fujidempa Kogyo Co., Ltd., model: Multi500), and synthesis was performed at 1650°C in a nitrogen atmosphere. The powder after the synthesis was pulverized in a mortar and used as a silicon nitride sintering aid.

Compounds of the synthesized powder were identified using X-ray diffraction (Rigaku Corporation, model: RINT2500) and SEM-EDX (JEOL Ltd., model: JSM-5600). XRD results are shown in Fig. 6.

As a result of analysis, it was confirmed that $Ce_3Si_8N_{12}C_2$ was synthesized. The average particle size $D_{50}$ was 1.9 pm.

(2) Production of $Zr_3Si_8N_{12}C_2$

A zirconium oxide powder ($ZrO_2$: Kojundo Chemical Lab. Co., Ltd.), a silicon nitride powder ($Si_3N_4$: UBE Corporation), and a carbon powder (C: Mitsubishi Chemical Corporation) were weighed so that the composition ratio would be $ZrO_2 : Si_3N_4 : C = 46 : 47 : 7$, and mixed in ethanol for 2 hours under the condition of a rotational speed of 250 rpm using a planetary mill (manufactured by Fritsch Japan Co.,Ltd.). A silicon nitride pot and silicon nitride balls ($\varphi$: 1.0 mm) were used for mixing. Though a planetary mill was used as the mixing method and ethanol was used as the solvent, the mixing method and the solvent to be used are not limited thereto at all.

The solvent of the resulting slurry was volatilized with an evaporator, and the slurry was vacuum-dried at 110°C for 4 hours to be used as a starting material. The obtained mixed powder was weighed in a BN crucible, and set in a vacuum/pressurized atmosphere furnace (manufactured by Fujidempa Kogyo Co., Ltd., model: Multi500), and synthesis was performed at 1650°C in a nitrogen atmosphere. The powder after the synthesis was pulverized in a mortar and used as a silicon nitride sintering aid.

Compounds of the synthesized powder were identified using X-ray diffraction (Rigaku Corporation, model: RINT2500) and SEM-EDX (JEOL Ltd., model: JSM-5600). XRD results are shown in Fig. 7.

As a result of analysis, it was confirmed that $Zr_3Si_8N_{12}C_2$ was synthesized. The average particle size $D_{50}$ was 2.0 pm.

<Metal oxide compound>

Yttria ($Y_2O_3$): manufactured by Shin-Etsu Chemical Co., Ltd.
Magnesium oxide (MgO)

<Metal-silicon nitride compound>

Magnesium silicon nitride ($MgSiN_2$)
A magnesium silicide powder having a purity of 99% and a particle size of 150 pm (Kojundo Chemical Lab. Co., Ltd.), a silicon powder having a purity of 99.9% and a particle size of 5 pm (Kojundo Chemical Lab. Co., Ltd.) and a silicon nitride powder having a purity of 99% and a particle size of 1 pm (Kojundo Chemical Lab. Co., Ltd.) were weighed in a ratio of 70.1 : 19.2 : 10.7, and these powders were mixed using a silicon nitride ball mill. The mixed powder was filled in a high-purity boron nitride (BN) crucible, heated to 1450°C in a nitrogen atmosphere, and held for 4 hours for synthesis using a vacuum/pressurized atmosphere furnace (manufactured by Fujidempa Kogyo Co., Ltd., model: Multi500). XRD measurement was performed to identify the synthesized powder.

<Binder>

As a binder, a polyvinyl alcohol resin (JAPAN VAM & POVAL CO., LTD.), which is a water resin binder, was used.

[Example 1]

A silicon nitride powder A (100 parts by mass), $Y_2Si_4N_6C$ (5 parts by mass) as a metal-silicon carbonitride compound, yttria (1 part by mass), and magnesium silicon nitride (2 parts by mass) were weighed, and pulverized and mixed for 24 hours using water as a molding aid, a resin pot, and silicon nitride balls. The water was weighed in advance so that the concentration of the slurry would be 60 wt%, and placed into the resin pot. After pulverization and mixing, 22 parts by mass of a water resin binder was added, and the mixture was further mixed for 12 hours to obtain a mixed raw material of a slurry. Then, after adjusting the viscosity of the mixed raw material using a vacuum deaerator (manufactured by Sayama Riken), sheet molding was performed by doctor blade method to obtain a sheet molded body having a width of 75 cm and a thickness of 0.42 mm.

The sheet molded body obtained as described above was degreased in dry air at a temperature of 550°C to obtain a molded body composed of the mixed raw material. The physical properties (total content of aluminum element and density) of the obtained molded body are shown in Table 2.

Then, the molded body was placed in a firing container and fired at 1780°C for 9 hours under a nitrogen atmosphere and a pressure of 0.03 MPa G to obtain a silicon nitride sintered body. The physical properties (relative density and thermal conductivity) of each sintered body are shown in Table 2.

[Examples 2 to 9]

A silicon nitride sintered body was obtained in the same manner as in Example 1 except that the composition of the molded body composed of the mixed raw material was changed as shown in Table 2. The physical properties of each molded body and sintered body are shown in Table 2.

[Comparative Example 1]

A silicon nitride sintered body was obtained in the same manner as in Example 1 except that the composition of the molded body composed of the mixed raw material was changed to one in which a metal-silicon carbonitride compound is not used as shown in Table 2. The physical properties of each molded body and sintered body are shown in Table 2.

[Comparative Example 2]

A silicon nitride sintered body was obtained in the same manner as in Example 1 except that the composition of the molded body composed of the mixed raw material was changed to one in which a metal oxide compound and a metal-silicon nitride compound are not used as shown in Table 2. The physical properties of each molded body and sintered body are shown in Table 2.

[Comparative Example 3]

A silicon nitride sintered body was obtained in the same manner as in Example 1 except that the composition of the molded body composed of the mixed raw material was changed to one in which a metal-silicon carbonitride compound and a metal-silicon nitride compound are not used as shown in Table 2. The physical properties of each molded body and sintered body are shown in Table 2.

[Table 2]

| | | Examples | | | | | | | | | Comparative Examples | | |
|---|---|---|---|---|---|---|---|---|---|---|---|---|---|
| | | 1 | 2 | 3 | 4 | 5 | 6 | 7 | 8 | 9 | 1 | 2 | 3 |
| Silicon nitride powder A (part by mass) | | 100 | 100 | 100 | 100 | 100 | 100 | 100 | 100 | 100 | 100 | 100 | 100 |
| Metal-silicon carbonitride compound A (part by mass) | $Y_2Si_4N_6C$ | 5 | - | - | - | - | - | 5 | 5 | - | - | 5 | - |
| | $Yb_2Si_4N_6C$ | - | 5 | - | - | - | - | - | - | - | - | - | - |
| | $La_2Si_4N_6C$ | - | - | 5 | - | - | - | - | - | - | - | - | - |
| | $Er_2Si_4N_6C$ | - | - | - | 5 | - | - | - | - | - | - | - | - |
| Metal-silicon carbonitride compound B (part by mass) | $Ce_3Si_8N_{12}C_2$ | - | - | - | - | 5 | - | - | - | 5 | - | - | - |
| | $Zr_3Si_8N_{12}C_2$ | - | - | - | - | - | 5 | - | - | - | - | - | - |
| Metal oxide compound (part by mass) | MgO | - | - | - | - | - | - | 1 | 3 | 1 | - | - | - |
| | $Y_2O_3$ | 1 | 1 | 1 | 1 | 1 | 1 | 1 | - | 1 | 3.5 | - | 5 |
| Metal-silicon nitride compound (part by mass) | $MgSiN_2$ | 2 | 2 | 2 | 2 | 2 | 2 | - | - | - | 1.5 | - | - |
| Firing pressure (MPa ·G) | | 0.03 | 0.03 | 0.03 | 0.03 | 0.03 | 0.03 | 0.03 | 0.03 | 0.03 | 0.03 | 0.03 | 0.03 |
| Firing temperature (°C) | | 1780 | 1780 | 1780 | 1780 | 1780 | 1780 | 1780 | 1780 | 1780 | 1780 | 1780 | 1780 |
| Total content of aluminum element (ppm) | | 150 | 150 | 150 | 150 | 150 | 150 | 150 | 150 | 150 | 150 | 150 | 150 |
| Density (g/cm$^3$) | | 3.23 | 3.24 | 3.22 | 3.23 | 3.24 | 3.25 | 3.21 | 3.22 | 3.23 | 3.20 | 2.69 | 3.02 |
| Relative density (%) | | 99 | 99 | 99 | 99 | 99 | 99 | 99 | 99 | 99 | 99 | 90 | 95 |
| Thermal conductivity (W/mk) | | 108 | 109 | 107 | 100 | 102 | 100 | 95 | 94 | 96 | 90 | - | - |

[Examples 10 to 16]

A silicon nitride sintered body was obtained in the same manner as in Example 1 except that the composition of the molded body composed of the mixed raw material, the firing pressure, and the firing temperature were changed as shown in Table 3. The physical properties of each molded body and sintered body are shown in Table 3.

[Table 3]

| | | Examples | | | | | | |
|---|---|---|---|---|---|---|---|---|
| | | 10 | 11 | 12 | 13 | 14 | 15 | 16 |
| Silicon nitride powder A (part by mass) | | 100 | 100 | 100 | 100 | 100 | 100 | 100 |
| Metal-silicon carbonitride compound A (part by mass) | $Y_2Si_4N_6C$ | 3 | 3.5 | 2 | - | - | 5 | - |
| Metal-silicon carbonitride compound B (part by mass) | $Ce_3Si_8N_{12}C_2$ | - | - | - | 2 | 5 | - | 5 |
| Metal oxide compound (part by mass) | MgO | - | 1.5 | - | - | - | 1.5 | 1.5 |
| | $Y_2O_3$ | 1 | - | 1.5 | 1.5 | 1 | - | - |
| Metal-silicon nitride compound (part by mass) | $MgSiN_2$ | 1.5 | - | 1.5 | 1.5 | 1.5 | - | - |
| Firing pressure (MPa G) | | 0.90 | 0.90 | 0.03 | 0.03 | 0.90 | 0.90 | 0.90 |
| Firing temperature (°C) | | 1900 | 1900 | 1780 | 1780 | 1900 | 1900 | 1900 |
| Total content of aluminum element (ppm) | | 150 | 150 | 150 | 150 | 150 | 150 | 150 |
| Density (g/cm$^3$) | | 3.23 | 3.22 | 3.22 | 3.23 | 3.25 | 3.21 | 3.22 |
| Relative density (%) | | 99 | 99 | 99 | 99 | 99 | 99 | 99 |
| Thermal conductivity (W/mk) | | 110 | 102 | 111 | 110 | 108 | 99 | 96 |

The silicon nitride sintered body produced by the method of each Example using a specific metal-silicon carbonitride compound and metal oxide compound as sintering aids was dense and had a high thermal conductivity. It was confirmed that among Examples, the Examples in which a metal-silicon nitride compound was used tended to have a higher thermal conductivity than Examples 7 to 9 in which the compound was not used.

On the other hand, the silicon nitride sintered body produced by the method of each Comparative Example not using one of a specific metal-silicon carbonitride compound and a metal oxide compound as a sintering aid was inferior in density or had a lower thermal conductivity.

A metal-silicon carbonitride compound A and a metal-silicon carbonitride compound B having a metal element (M) different from those used in the Examples were synthesized, and a silicon nitride sintered body was produced using these in the same manner. As a result, it was confirmed that a silicon nitride sintered body that is dense and has a high thermal conductivity is obtained.

**Claims**

1. A method for producing a silicon nitride sintered body, comprising:
   firing a mixed raw material containing 100 parts by mass of a silicon nitride powder, 1 to 10 parts by mass of at least one metal-silicon carbonitride compound selected from the group consisting of a metal-silicon carbonitride compound A represented by a composition formula $M_2Si_4N_6C$ (M is Hf, Mg, Sr, Zr, Sc, Y, or a lanthanoid element) and a metal-silicon carbonitride compound B represented by a composition formula $M_3Si_8N_{12}C_2$ (M is Hf, Mg, Sr, Zr, Sc, Y, or a lanthanoid element), and 1 to 10 parts by mass of a metal oxide compound.

2. The method for producing a silicon nitride sintered body according to claim 1, wherein the mixed raw material further contains 1 to 10 parts by mass of a metal-silicon nitride compound relative to 100 parts by mass of the silicon nitride powder.

3. The method for producing a silicon nitride sintered body according to claim 1 or 2, wherein the firing is performed at a temperature of 1200 to 1900°C under an inert gas atmosphere and a pressure of 0 MPa ·G or more and 0.92 MPa ·G or less.

4. The method for producing a silicon nitride sintered body according to any one of claims 1 to 3, wherein a molded body comprising the mixed raw material is produced using water as a molding aid and then fired.

Fig. 1

2θ/θ

Fig. 2

Fig. 3

2θ/θ

Fig. 4

2θ/θ

Fig. 5

Fig. 6

2θ/θ

Fig. 7

# EP 4 317 057 A1

## INTERNATIONAL SEARCH REPORT

| | International application No. |
|---|---|
| | **PCT/JP2022/014453** |

**A. CLASSIFICATION OF SUBJECT MATTER**

*C01B 21/068*(2006.01)i; *C04B 35/596*(2006.01)i
FI: C04B35/596; C01B21/068

According to International Patent Classification (IPC) or to both national classification and IPC

**B. FIELDS SEARCHED**

Minimum documentation searched (classification system followed by classification symbols)

C01B21/068; C04B35/00-C04B35/84; H05K1/03; H01L23/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | LI, Yinsheng et al. Enhanced thermal conductivity in Si3N4 ceramic with the addition of Y2Si4N6C. Journal of the American Ceramic Society, 2018, vol. 101, no. 9, pp. 4128-4136, DOI:10.1111/JACE.15544 abstract, 2. experimental procedure, table 1 | 1-4 |
| X | JP 2015-86125 A (UNIV TOHOKU) 07 May 2015 (2015-05-07) claims, paragraphs [0006], [0012], [0015], [0024], [0026] | 1-4 |
| A | JP 2002-128569 A (NATIONAL INSTITUTE OF ADVANCED INDUSTRIAL SCIENCE AND TECHNOLOGY) 09 May 2002 (2002-05-09) | 1-4 |
| P, X | WO 2021/107021 A1 (TOKUYAMA CORP.) 03 June 2021 (2021-06-03) claims | 1-4 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**21**

INTERNATIONAL SEARCH REPORT
Information on patent family members

International application No.

**PCT/JP2022/014453**

| Patent document cited in search report | | | Publication date (day/month/year) | Patent family member(s) | Publication date (day/month/year) |
|---|---|---|---|---|---|
| JP | 2015-86125 | A | 07 May 2015 | (Family: none) | |
| JP | 2002-128569 | A | 09 May 2002 | (Family: none) | |
| WO | 2021/107021 | A1 | 03 June 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009161376 A
- JP 10218612 A
- JP 2002128569 A
- JP 2000264608 A
- WO 2019167879 A

**Non-patent literature cited in the description**

- *Journal of Nihon Hakuyo Kikan Gakkai,* September 1993, vol. 28 (9), 548-556
- *Journal of the Ceramic Society of Japan,* 1992, vol. 100 (11), 1366-1370
- **C. P. GAZZARA ; D. R. MESSIER.** *Ceram. Bull.,* 1977, vol. 56, 777-780